# EUROPÄISCHE PATENTSCHRIFT

(11) **EP 2 070 752 B1**
(45) Veröffentlichungstag und Bekanntmachung des Hinweises auf die Patenterteilung: **22.05.2013**
(21) Anmeldenummer: 08020349.0
(22) Anmeldetag: 22.11.2008
(51) Int. Cl.: B60J 7/185

(54) **Verdeck für ein Cabriolet-Fahrzeug**
Soft top for a convertible vehicle
Capote pour un véhicule cabriolet

(30) Priorität: 12.12.2007 DE 102007059872
(43) Veröffentlichungstag der Anmeldung: 17.06.2009
(73) Patentinhaber: Valmet Automotive Oy, 23500 Uusikaupunki (FI)
(72) Erfinder: Feußahrens, Heino, 49419 Wagenfeld (DE)
(74) Vertreter: Kronthaler, Schmidt & Coll.

(56) Entgegenhaltungen:
- DE-A1-102005 059 872
- GB-A- 530 209
- GB-A- 936 485
- US-A- 2 570 260
- US-A- 2 709 621
- US-A- 5 046 767

## Beschreibung

Die Erfindung betrifft ein Verdeck für ein Cabriolet-Fahrzeug, welches zwischen einer einen Fahrgastraum freigebenden Position und einer den Fahrgastraum überspannenden Position verlagerbar ist, nach der im Oberbegriff des Patentanspruches 1 näher definierten Art.

Zur Festlegung eines Verdecks in dessen geschlossener Position an einer Windschutzscheibenhalterung sind unterschiedliche Verriegelungskonzepte bekannt. Dabei kann zwischen automatischen bzw. halbautomatischen und manuellen Verriegelungskonzepten unterschieden werden, wobei das Verdeck bei automatischen oder halbautomatischen Konzepten wenigstens teilweise mit Hilfe eines Antriebmotors an der Windschutzscheibenhalterung festgelegt wird. Bei manuellen Konzepten dagegen ist es notwendig, eine Verriegelungseinrichtung des Verdecks zur Festlegung des Verdecks an dem Windschutzscheibenrahmen manuell zu bedienen.

Ein Beispiel für ein manuell festzulegendes Verdeck ist in der DE 10 2005 059 872 A1 beschrieben. Das darin offenbarte Verdeck für ein Cabriolet-Fahrzeug weist wenigstens ein Dachelement auf, welches zum Schließen des Verdecks über einen Dachrahmen spannbar und mit einem frontseitigen Ende an einer Windschutzscheibenhalterung festlegbar ist. Der Dachrahmen ist im Bereich der Anlenkung von Seitenholmen an eine erste Quertraverse an dem Cabriolet-Fahrzeug derart festlegbar, dass ein an dem anlenkungsseitigen Ende des jeweiligen Seitenholms angeordnetes Verriegelungselement bei Überführung des Seitenholms von einer an die erste Quertraverse angeschwenkten Position in eine um wenigstens annähernd 90° weggeschwenkte Position in Eingriff mit einem Verriegelungsgegenelement des Cabriolet-Fahrzeugs bringbar ist.

Es ist Aufgabe der vorliegenden Erfindung, ein Verdeck für ein Cabriolet-Fahrzeug nach der eingangs genannten Art zu schaffen, welches sehr einfach und zuverlässig an einer Windschutzscheibenhalterung festlegbar ist.

Diese Aufgabe wird bei einem Verdeck der eingangs genannten Art mit den Merkmalen des kennzeichnenden Teils des Patentanspruches 1 gelöst.

Die Erfindung sieht ein Verdeck für ein Cabriolet-Fahrzeug vor, welches zwischen einer einen Fahrgastraum freigebenden Position und einer den Fahrgastraum überspannenden Position verlagerbar ist, mit wenigstens einem Dachelement, welches zum Schließen des Verdecks mit einem frontseitigen Ende durch wenigstens eine Verriegelungseinrichtung an einer Windschutzscheibenhalterung festlegbar ist, wobei an dem Dachelement ein Verriegelungselement der Verriegelungseinrichtung schwenkbar um eine an dem Dachelement angeordnete Schwenkachse ausgebildet ist, welches zum Festlegen des Verdecks mit einem an der Windschutzscheibenhalterung angeordneten Verriegelungsgegenelement der wenigstens einen Verriegelungseinrichtung zusammenwirkt.

Erfindungsgemäß wird vorgeschlagen, dass das Verriegelungselement ein Griffelement aufweist, welches sich sowohl bei geschlossener Position des Verdecks mit sich in Verriegelungsposition befindlicher Verriegelungseinrichtung als auch bei offenem Verdeck im Bereich eines Dachrandes wenigstens annähernd in Fahrzeuglängsrichtung an dem Dachelement erstreckt und zum In- und Aus-Eingriff-Bringen des Verriegelungselements mit dem Verriegelungsgegenelement wenigstens annähernd parallel zu einer Fahrzeugbodenebene in Richtung Fahrgastraum verschwenkbar ist, wobei das Veriegelungselement gegenüber dem Dachelement um die Schwenkachse schwenkbar ist.

Eine erfindungsgemäße Anordnung des Griffelements, durch dessen einfache Verschwenkung zum Fahrzeuginnenraum bzw. zur Windschutzscheibe hin ein Verriegelungselement und ein Verriegelungsgegenelement außer Eingriff bringbar sind, wonach das Verdeck beispielsweise bei einem Öffnungsvorgang angehoben werden kann und mit vorzugsweise wieder in seine Ausgangsstellung zurückverschwenktem Verriegelungselement abgelegt werden kann, hat zudem den Vorteil, dass der Verriegelungsmechanismus Platz sparend, optisch ansprechend und mechanisch äußert einfach aufgebaut in das Verdeck integriert werden kann.

Als Windschutzscheibenhalterung können dabei einerseits ein sich über die Fahrzeugbreite erstreckender Windschutzscheibenrahmen und andererseits die Windschutzscheibe nur seitlich einfassende A-Säulen in Betracht kommen.

Es ist insbesondere vorteilhaft, wenn die Anlaufschräge derart auf eine Dicke des zum Zusammenwirken mit dem Verriegelungsgegenelement vorgesehenen Abschnitts des Verriegelungselements abgestimmt ist, dass das Verriegelungselement in seiner mit der Aufnahmeeinrichtung in Eingriff befindlichen Verriegelungsposition spielfrei in der Aufnahmeeinrichtung gelagert ist.

Ein erfindungsgemäß ausgebildetes Verdeck kann dabei vorteilhafterweise sowohl bei automatisiert bzw. teilautomatisiert bedienbaren Verriegelungseinrichtungen als auch bei manuell zu bedienenden Verriegelungseinrichtungen eingesetzt werden.

In einer vorteilhaften Ausbildung eines erfindungsgemäßen Verdecks kann es vorgesehen sein, dass das Verriegelungselement zur formschlüssigen Festlegung in der Aufnahmeeinrichtung an seinem zum Zusammenwirken mit dem Verriegelungsgegenelement vorgesehenen Abschnitt ein Rastelement einer Rasteinrichtung aufweist, welche in Verriegelungsposition des Verriegelungselements mit einem Rastgegenelement der Rasteinrichtung zusammenwirkt. Durch diese formschlüssige Festlegung des Verriegelungselements in der Aufnahmeeinrichtung kann verhindert werden, dass das Verriegelungselement unter Belastung aus der Aufnahmeeinrichtung herausgedreht und das Verdeck beispielsweise während einer Fahrt aus seiner festgelegten Position gelöst wird.

In einer einfachen Ausgestaltung der formschlüssigen Festlegung des Verriegelungselements in der Aufnahmeeinrichtung kann das Rastelement als ein sich in Verriegelungsposition des Verriegelungselements wenigstens annähernd in Fahrzeuglängsrichtung erstreckendes Nockenelement ausgebildet sein, welches mit dem als Nut ausgebildeten Rastgegenelement zusammenwirkt.

Um eine formschlüssige Festlegung des Verriegelungselements auch in seiner spielfreien Endposition in der Aufnahmeeinrichtung herstellen zu können, wird in einer vorteilhaften Weiterbildung der Erfindung vorgeschlagen, dass das Nokkenelement in Fahrzeughochrichtung gegenüber dem zum Zusammenwirken mit dem Verriegelungsgegenelement vorgesehenen, wenigstens annähernd parallel zur Fahrzeugbodenebene sich erstreckenden und verschwenkbaren Abschnitt des Verriegelungselements bewegbar ist und von einer Federeinrichtung in Verriegelungsposition des Verriegelungselements in die Nut des Verriegelungsgegenelements gedrückt ist.

Bei einer einfachen Ausgestaltung des Verriegelungselements kann sich das Griffelement von der Schwenkachse des Verriegelungselements in wenigstens annähernd entgegengesetzte Richtung wie der mit dem Verriegelungsgegenelement zusammenwirkende Abschnitts des Verriegelungselements erstrecken.

Der mit dem Verriegelungsgegenelement zusammenwirkende Abschnitts des Verriegelungselements kann in einer vorteilhaften Ausführung wenigstens annähernd plattenförmig ausgebildet sein. Alternativ sind jedoch auch andere Formen, wie insbesondere ein Stiftform, für die Gestaltung dieses Abschnitts denkbar.

Das Griffelement kann einstückig mit dem mit dem Verriegelungsgegenelement zusammenwirkenden Abschnitt des Verriegelungselements ausgebildet sein und in einfacher Weise ein längliches, platten- bzw. blechartiges Element darstellen, welches in Platz sparender Weise senkrecht zur Fahrzeuggrundebene und ggf. zur Ebene des plattenförmigen Abschnitts des Verriegelungselements ausgerichtet sein kann.

Ein solches Griffelement kann sowohl manuell bedienbar als auch zur Bedienung durch einen Antrieb ausgebildet sein.

Das Griffelement kann in einer vorteilhaften Ausbildung eines erfindungsgemäßen Verdecks von einer Federeinrichtung in seine wenigstens annähernd parallel zu dem Dachelement angeordnete Position gezogen oder gedrückt werden.

Um eine Zentrierung des Verdecks vor der Festlegung des Verdecks in seiner geschlossenen Position mit der Verriegelungseinrichtung an der Windschutzscheibenhalterung zu ermöglichen, wird gemäß einer vorteilhaften Ausbildung eines erfindungsgemäßen Verdecks vorgeschlagen, dass eine Zentriereinrichtung mit einem an dem Dachelement angeordneten Zentrierelement und einem an der Windschutzscheibenhalterung angeordneten Zentriergegenelement vorgesehen ist.

Bei einer vorteilhaft einfachen Ausgestaltung der Zentriereinrichtung wird vorgeschlagen, dass das Zentrierelement als ein Bolzen ausgebildet ist, welcher zum Zusammenwirken mit dem in Form einer Bohrung ausgebildeten Zentriergegenelement ausgebildet ist, wobei das als Bohrung ausgebildete Zentriergegenelement zur Verbesserung der Zentriergenauigkeit in einer vorteilhaften Weiterbildung der Erfindung in Fahrzeughochrichtung konisch geformt ausgebildet werden kann. Neben der Bohrung kann in einer Weiterbildung der Erfindung auch der Bolzen konisch ausgebildet sein.

Eine hohe Stabilität in der Festlegung des Verdecks in seiner geschlossenen Position an der Windschutzscheibenhalterung kann dadurch erzielt werden, dass zwei Verriegelungseinrichtungen vorgesehen sind, wobei eine Verriegelungseinrichtung in einem in Fahrzeugfrontrichtung linken Bereich und eine weitere Verriegelungseinrichtung in einem in Fahrzeugfrontrichtung rechten Bereich des Verdecks angeordnet ist.

Das Dachelement, an dem die Schwenkachse des Verriegelungselements angeordnet ist, kann als eine sich in Fahrzeugquerrichtung über die Fahrzeugbreite erstreckende Dachspitze ausgebildet sein. Alternativ hierzu kann es aber auch vorgesehen sein, dass das Dachelement als ein Seitenholm oder sonstiges Gestängeelement des Verdecks ausgebildet ist.

Weitere Vorteile und vorteilhafte Ausführungen eines Verdecks eines Cabriolet-Fahrzeugs nach der Erfindung ergeben sich aus den Patentansprüchen, der Zeichnung und der Beschreibung.

Nachfolgend ist ein vorteilhaftes Ausführungsbeispiel eines erfindungsgemäß ausgestalteten Verdecks eines Cabriolet-Fahrzeugs anhand der Zeichnung prinzipmäßig beschrieben.

Es zeigt
- Fig. 1: eine dreidimensionale Darstellung eines Cabriolet-Fahrzeugs mit einem als Soft-Top-Verdeck ausgebildeten Verdeck in einer geschlossenen Position;
- Fig. 2: einen dreidimensionalen Ausschnitt des Cabriolet-Fahrzeugs der Fig. 1, wobei das Verdeck mit einem Verriegelungselement einer Verriegelungseinrichtung in einer beabstandet von einem Verriegelungsgegenelement der Verriegelungseinrichtung befindlichen Position dargestellt ist;
- Fig. 3: einen dreidimensionalen Ausschnitt des Cabriolet-Fahrzeugs der Fig. 2, wobei das Verriegelungselement in einer um eine Schwenkachse gegenüber einem Seitenholm verschwenkten Position dargestellt ist;
- Fig. 4: einen dreidimensionalen Ausschnitt des Cabriolet-Fahrzeugs der Fig. 2 und Fig. 3, wobei das Verdeck in Anlage mit einer Windschutzscheibenhalterung dargestellt ist;
- Fig. 5: einen dreidimensionalen Ausschnitt des Cabriolet-Fahrzeugs der Figuren 2 bis 4, wobei das Verriegelungselement gegenüber seiner in der Fig. 3 dargestellten Position in Richtung des Seitenholms um die Schwenkachse verschwenkt ist;
- Fig. 6: einen dreidimensionalen Ausschnitt des Cabriolet-Fahrzeugs der Figuren 2 bis 5, wobei das Verriegelungselement etwa parallel zu dem Seitenholm angeordnet ist und ein mit dem Verriegelungsgegenelement zusammenwirkender Abschnitt des Verriegelungselements in Eingriff mit dem Verriegelungsgegenelement ist; und
- Fig. 7: eine dreidimensionale Darstellung des Cabriolet-Fahrzeugs der Fig. 6 aus einer anderen Perspektive.

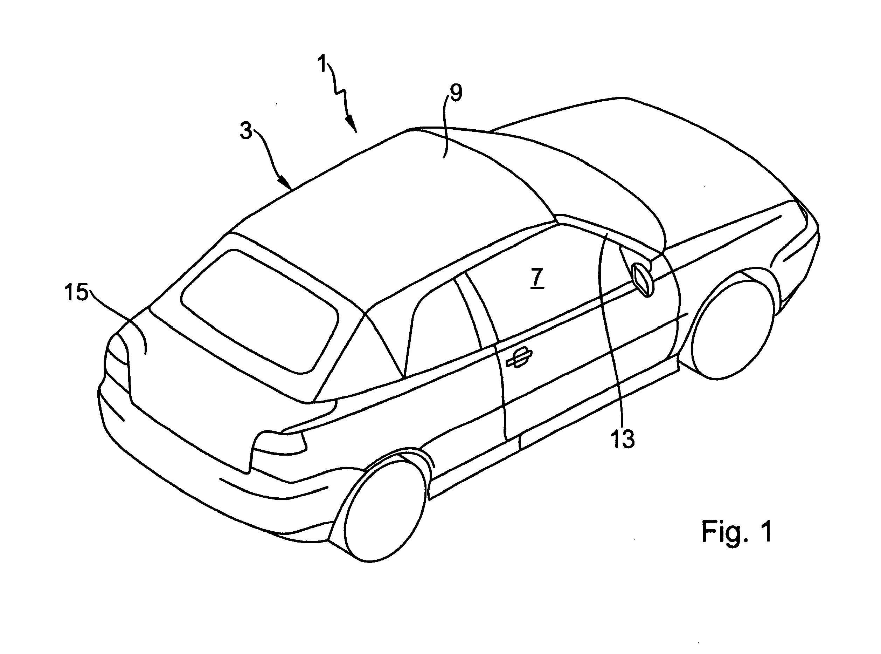

In Fig. 1 ist ein Cabriolet-Fahrzeug 1 mit einem in geschlossener Position dargestellten, als Soft-Top-Verdeck ausgebildeten Verdeck 3 gezeigt.

Das Verdeck 3 kann mit einem in der Fig. 1 nicht näher dargestellten Verdeckgestänge 5 zwischen der einen Fahrgastraum 7 überdeckenden geschlossenen Position und einer den Fahrgastraum 7 freigebenden offenen Position überführt werden.

In der dargestellten geschlossenen Position erstreckt sich das mit einem Verdeckbezug 9 ausgebildete Verdeck 3 von seiner fahrzeugfrontseitigen Anordnung an einer Windschutzscheibenhalterung 11, 13 bis zu seiner fahrzeugheckseitigen Anordnung an einem Heckdeckel 15.

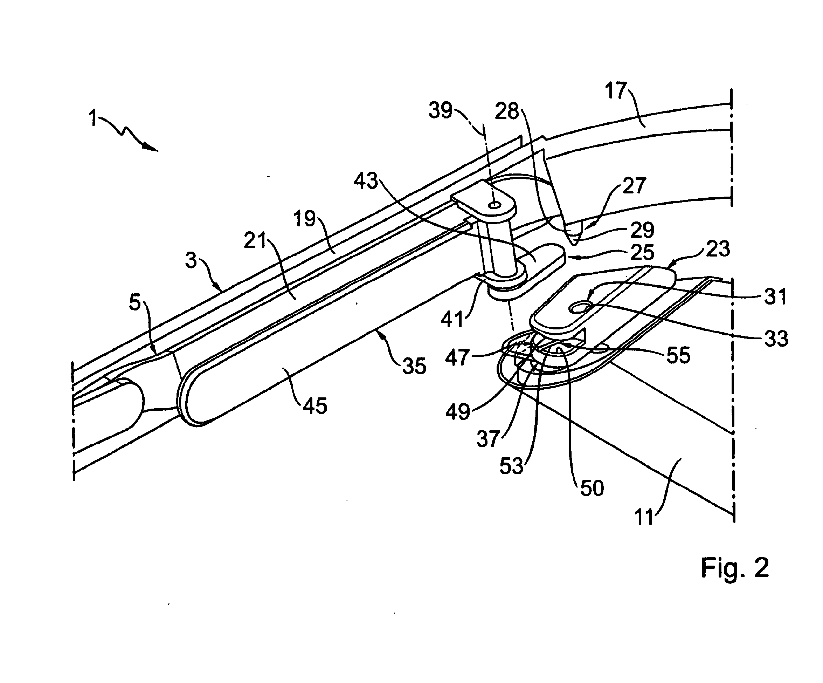

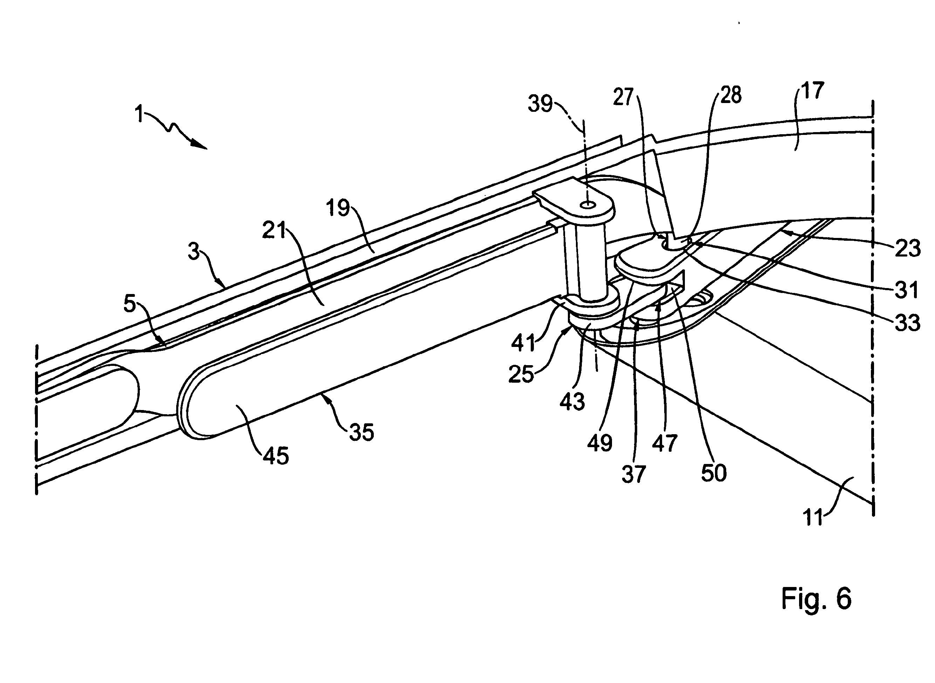

Die Figuren 2 bis 7 zeigen einen letzten Abschnitt eines Bewegungsablaufes bei einem Überführen des Verdecks 3 von einer offenen Position in eine geschlossene Position, wobei insbesondere eine Zentrierung und eine Verriegelung eines in Fahrzeugfrontrichtung links angeordneten Bereichs des Verdecks 3 an einer in Fahrzeugfrontrichtung links angeordneten, als A-Säule 11 ausgebildeten Windschutzscheibenhalterung gezeigt ist.

Zur Zentrierung und Verriegelung des Verdecks 3 an der Windschutzscheibenhalterung 11, 13 in einem geschlossenen Zustand des Verdecks 3 ist das Verdeck 3 in einem in Fahrzeugfrontrichtung rechts angeordneten Bereich spiegelgleich zu dem in den Figuren 2 bis 7 dargestellten, in Fahrzeugfrontrichtung links angeordneten Bereich des Verdecks 3 ausgebildet, wobei der in Fahrzeugfrontrichtung rechts angeordnete Bereich des Verdecks 3 analog zu dem in Fahrzeugfrontrichtung linken Bereich des Verdecks 3 an einer in Fahrzeugfrontrichtung rechten, als A-Säule 13 ausgebildeten Windschutzscheibenhalterung zentrierbar und festgelegbar ist.

Im Folgenden wird eine Zentrierung und Verriegelung des Verdecks 3 in einem in Fahrzeugfrontrichtung linken Bereich stellvertretend für die Zentrierung und Verriegelung des Verdecks 3 in einem in Fahrzeugfrontrichtung rechten Bereich des Verdecks 3 beschrieben.

In den Figuren 2 bis 7 ist das Verdeck 3 der Übersichtlichkeit halber ohne den Verdeckbezug 9 dargestellt, so dass ein Ausschnitt einer eine Fahrzeugbreite überspannenden, als Dachspitze 17 ausgebildeten Quertraverse und eines fahrzeugheckseitig in einem in Fahrzeugfrontrichtung linken Bereich an die Dachspitze 17 anschließenden, als Seitenholm 19 ausgebildeten Dachelements ersichtlich sind.

An dem Dachseitenholm 19 ist das Verdeckgestänge 5 angeordnet, mittels welchem das Verdeck 3 zwischen einem offenen und einem geschlossenen Zustand überführbar ist, wobei ein vorderes Hebelelement 21 des Verdeckgestänges 5 im Wesentlichen parallel zu dem Seitenholm 19 verlaufend fest an diesem angeordnet ist.

Zur Festlegung des Verdecks 3 an der A-Säule 11 ist einerseits eine Zentriereinrichtung 23 vorgesehen, mittels welcher das Verdeck 3 in einer definierten Position an der A-Säule 11 angeordnet wird. Andererseits ist eine Verriegelungseinrichtung 25 vorgesehen, mittels welcher das Verdeck 3 nach der Zentrierung an der A-Säule 11 an dieser festlegbar ist.

Die Zentriereinrichtung 23 und die Verriegelungseinrichtung 25 sind vorliegend integral miteinander ausgebildet, so dass in diesem Bereich verwendete Bauteile vorteilhafterweise teilweise Funktionen für die Zentrierung und die Verriegelung übernehmen. In einer alternativen Ausbildung der Erfindung kann es auch vorgesehen sein, dass separate Bauteile für die Zentrierung und die Verriegelung vorgesehen sind.

Im Folgenden wird zunächst die Zentriereinrichtung 23 näher beschrieben. Im Anschluss daran wird näher auf die Verriegelungseinrichtung 25 eingegangen.

Die Zentriereinrichtung 23 ist mit einem an dem Verdeck 3 vorgesehenen Zentrierelement 27 ausgebildet, wobei das Zentrierelement 27 als ein Bolzen 28, welcher als bolzenartiger Fortsatz des vorderen Hebelelements 21 des Verdeckgestänges 5 ausgebildet ist, mit einer in geschlossenem Zustand des Verdeck 3 nach unten weisenden Spitze 29 ausgebildet ist.

Zum Zusammenwirken mit dem Zentrierelement 27 ist an der A-Säule 11 ein im Wesentlichen plattenförmig ausgebildetes Zentriergegenelement 31 mit einer als Bohrung 33 ausgebildeten Ausnehmung angeordnet. Ein Radius der Bohrung 33 des Zentriergegenelements 31 ist dabei größer gewählt als ein Radius des Bolzens 28 des Zentrierelements 27, so dass ein Eingriff des Bolzens 28 des Zentrierelements 27 in die Bohrung 33 des Zentriergegenelements 31 bei einer Überführung des Verdecks 3 von seiner offenen Position in seine geschlossene Position sichergestellt ist.

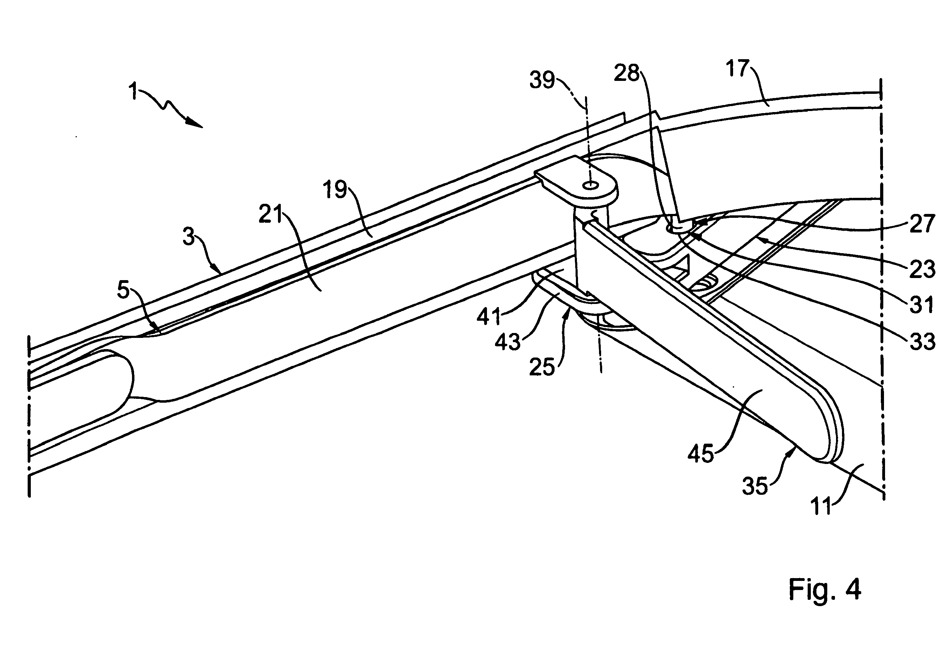

Die Bohrung 33 des Zentriergegenelements 31 verläuft dabei in Richtung eines Fahrzeugbodens konisch, so dass ein zwischen dem Bolzen 28 des Zentrierelements 27 und der Bohrung 33 des Zentriergegenelements 31 vorliegendes Spiel nach einem ersten Eingriff des Bolzens 28 des Zentrierelements 27 mit der Bohrung 33 des Zentriergegenelements 31 bis zu einem geschlossenen Zustand des Verdecks 3 zunehmend reduziert wird und bei beispielsweise in der Fig. 4 dargestelltem geschlossenen Zustand des Verdecks 3 kein Spiel mehr vorliegt.

In einer alternativen Ausbildung der Erfindung kann es auch vorgesehen sein, dass die Ausnehmung in Form eines Langloches ausgebildet ist.

Ausgehend von der eben beschriebenen Zentrierung des Verdecks 3 durch die Zentriereinrichtung 23 wird das Verdeck 3 an der A-Säule 11 verriegelt. Hierzu ist an dem Verdeck 3 ein Verriegelungselement 35 vorgesehen, welches zur Verriegelung des Verdecks 3 in dessen geschlossener Position mit einem an der A-Säule 11 angeordneten Verriegelungsgegenelement 37 zusammenwirkt.

Das Verriegelungselement 35 ist dabei in einer Halteeinrichtung 41 schwenkbar um eine Schwenkachse 39 gelagert, wobei die Halteeinrichtung 41 in einem fahrzeugfrontseitigen Bereich des vorderen Hebelelements 21 in Richtung einer Fahrzeugmitte versetzt an dem Hebelelement 21 angeordnet ist.

Ausgehend von der Schwenkachse 39 weist das Verriegelungselement 35 bei einem in der Fig. 2 dargestellten Zustand einen wenigstens annähernd in Fahrzeugfrontrichtung weisenden, sich in horizontaler Richtung plattenförmig erstreckenden Abschnitt 43 auf, welcher in einem dem Fahrzeugboden zugewandten Bereich unterhalb der Halteeinrichtung 41 zum Zusammenwirken mit dem Verriegelungsgegenelement 37 vorgesehen ist.

An einer dem plattenförmigen Abschnitt 43 bezüglich der Schwenkachse 39 wenigstens annähernd gegenüberliegenden Seite ist ein als Griffelement 45 ausgebildeter Bereich des Verriegelungselements 35 vorgesehen, wobei der plattenförmige Abschnitt 43 und das Griffelement 45 des Verriegelungselements 35 integral miteinander ausgebildet sind.

Hierdurch ist sichergestellt, dass eine Drehung des Griffelements 45 um die Schwenkachse 39 in einer entsprechenden Drehung des plattenförmigen Abschnitts 43 resultiert, wobei das Griffelement 45 hier zur manuellen Betätigung der Verriegelungseinrichtung 25 vorgesehen ist.

In dem in der Fig. 2 dargestellten Zustand verläuft das ebenfalls plattenförmig bzw. als längliches Blech ausgebildete Griffelement 45 wenigstens annähernd parallel zu dem Seitenholm 19 und dem vorderen Hebelelement 21. Um insbesondere auch in einem Fahrbetrieb bei geöffnetem oder geschlossenen Verdeck 3 sicherzustellen, dass das Griffelement 45 sich in der an dem Seitenholm 19 angeordneten günstigen Position befindet, ist eine nicht näher dargestellte Federeinrichtung im Bereich der Schwenkachse 39 vorgesehen, welche das Griffelement 45 in seine Position an dem Seitenholm 19 drückt.

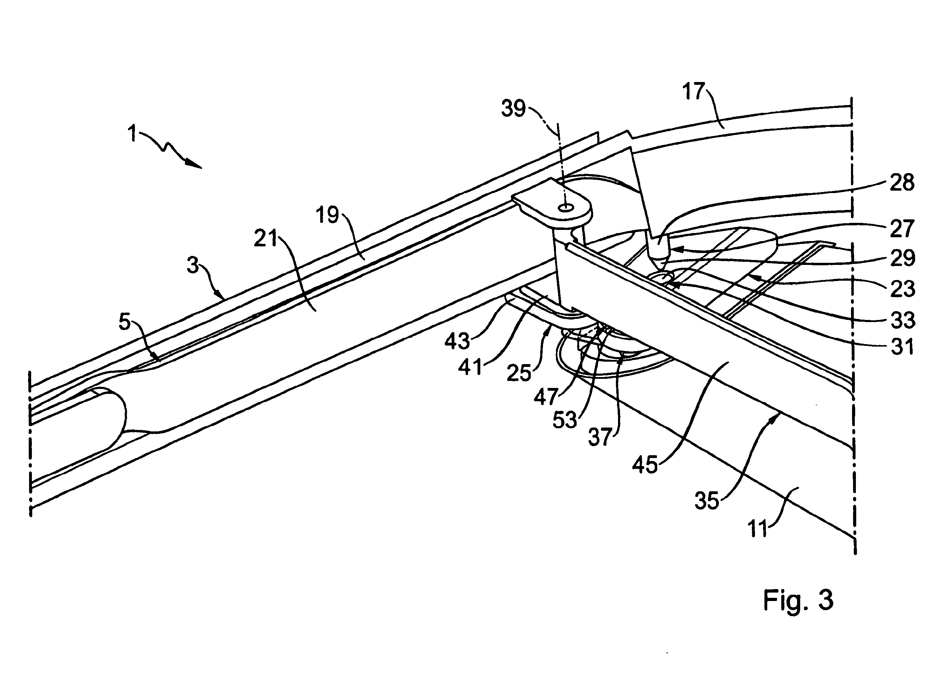

Ausgehend von dem in der Fig. 2 dargestellten, an den Seitenholm 19 angeschwenkten Position, wird das Griffelement 45 bei einer Heranführung des Verdecks 3 an die A-Säule 11 um wenigstens annähernd 90° entgegen dem Uhrzeigersinn um die Schwenkachse 39 in seine in der Fig. 3 dargestellte Position verschwenkt, wobei der plattenförmige Abschnitt 43 des Verriegelungselements 35 hierbei in Richtung einer linken Fahrzeugaußenseite verschwenkt wird. Das Verdeck 3 kann hierdurch in Anlage mit der A-Säule 11 in seine Position bei geschlossenem Verdeck 3 bewegt werden, da der plattenförmige Abschnitt 43 des Verriegelungselements 35 aus seiner eine derartige Bewegung behindernden Position in der Fig. 2 bewegt ist.

Bei sich in seiner um ca. 90° gegenüber dem Seitenholm 19 verschwenkten Griffelement 45 wird das Verdeck 3 nun in seine Position bei geschlossenem Verdeck 3 gemäß Fig. 4 bewegt, wobei die Zentriereinrichtung 23 wie oben beschrieben eine definierte Position des Verdecks 3 an der A-Säule 11 sicherstellt.

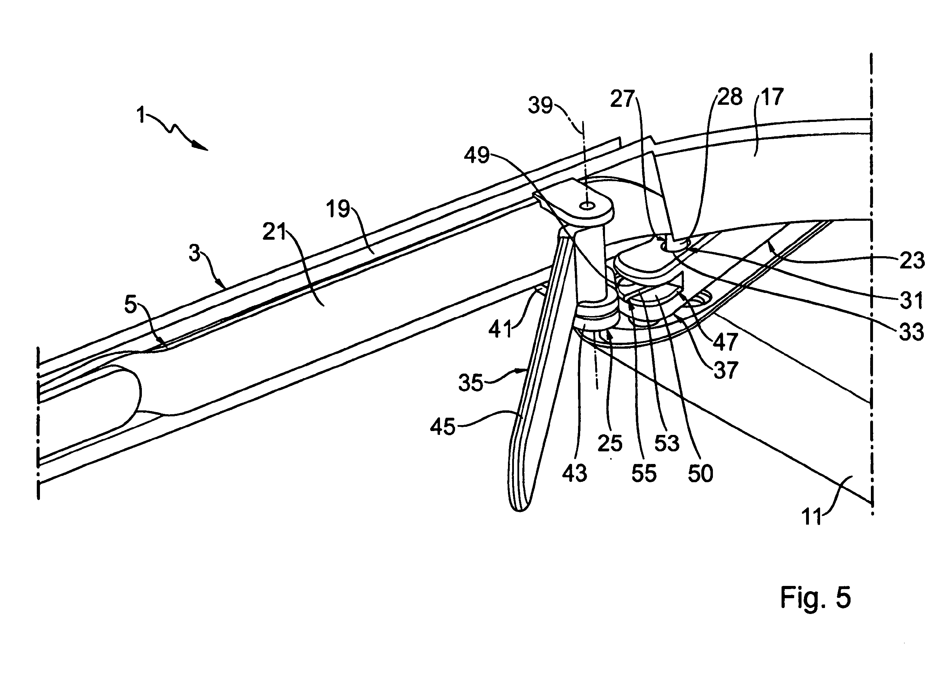

Das Griffelement 45 wird nun aus der in der Fig. 4 dargestellten um ca. 90° gegenüber dem Seitenholm 19 verschwenkten Position über die in der Fig. 5 dargestellte Position im Uhrzeigersinn zurück in seine parallel zu dem Seitenholm 19 angeordnete Position verschwenkt.

Der plattenförmige Abschnitt 43 des Verriegelungselements 35 wird dabei in eine an dem Verriegelungsgegenelement 37 angeordnete Aufnahmeeinrichtung 47 verschwenkt, welche in U-artig mit einem Aufnahmeschlitz zwischen zwei wenigstens annähernd parallel zu einer Fahrzeugbodenebene verlaufenden Plattenabschnitten ausgebildet ist.

In Richtung einer Fahrzeugmitte verlaufend weist die Aufnahmeeinrichtung 47 in ihrem oberen Bereich eine Anlaufschräge 49 auf, welche derart ausgebildet ist, dass der plattenförmige Abschnitt 43 des Verriegelungselements 35 bei einem Verschwenken in die Aufnahmeeinrichtung 47 in Richtung eines unteren Bereichs 50 der Aufnahmeeinrichtung 47 entgegen einer nach oben wirkenden Kraft gedrückt wird und der Verdeckbezug 9 des Verdecks 3 in der verriegelten Position des Verdecks 3 von der Verriegelungseinrichtung 25 gespannt wird.

Um eine optimale Spannung des Verdecks 3 zu erreichen, ist eine Dicke des plattenförmigen Abschnitts 43 des Verriegelungselements 35 derart mit der Anlaufschräge 49 der Aufnahmeeinrichtung 47 abgestimmt, dass der plattenförmige Abschnitt 43 des Verriegelungselements 35 in verriegeltem Zustand des Verdecks 3 insbesondere spielfrei in der Aufnahmeeinrichtung 47 gelagert ist.

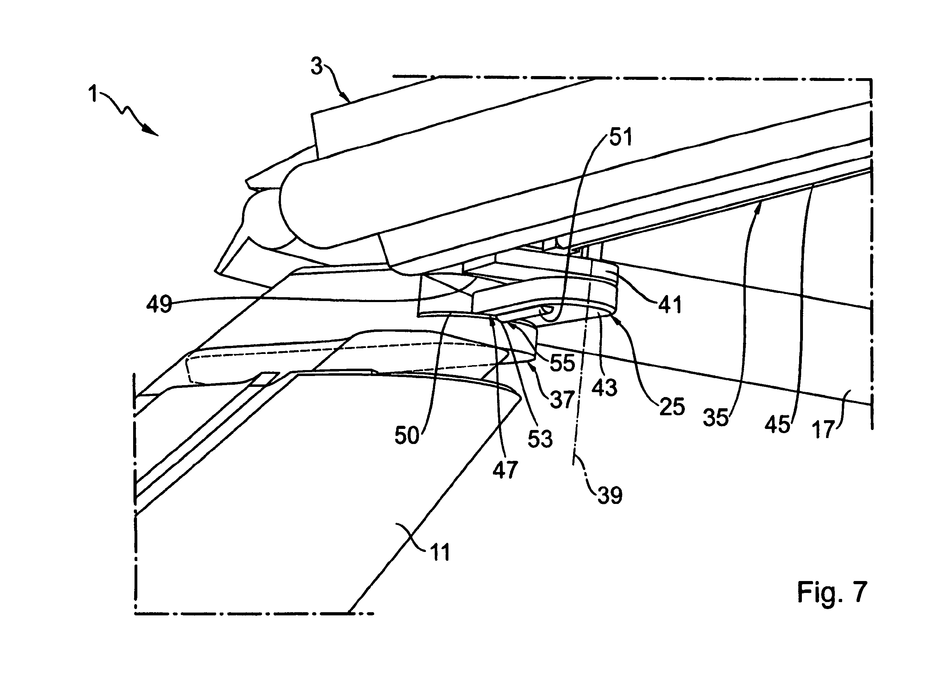

An einer in Richtung eines Fahrzeugbodens weisenden Seite des plattenförmigen Abschnitts 43 des Verriegelungselements 35 ist ein insbesondere in der Fig. 7 ersichtliches, als Nokkenelement 51 ausgebildetes Rastelement einer Rasteinrichtung 55 angeordnet, welches in verriegeltem Zustand des Verdecks 3 mit einem in dem unteren Bereich 47 der Aufnahmeeinrichtung 47 angeordneten, wenigstens annähernd in Fahrzeuglängsrichtung verlaufenden, als Nut 53 ausgebildeten Rastgegenelement der Rasteinrichtung 55 zusammenwirkt.

Das Nockenelement 51 ist dabei in Fahrzeughochrichtung federbelastet in dem plattenförmigen Abschnitt 43 des Verriegelungselements 35 gelagert, wobei das Nockenelement 51 in verriegelter Position des Verdecks 3 in die Nut 53 gedrückt wird. Durch ein Zusammenspiel des Nockenelements 51 mit der Nut 53 der Aufnahmeeinrichtung 47 wird eine formschlüssige Verbindung des Verdecks 3 mit der A-Säule 11 hergestellt und verhindert, dass sich der zum Zusammenwirken mit dem Verriegelungsgegenelements 37 vorgesehene Abschnitt 43 des Verriegelungselements 35 selbsttätig aus einem Eingriff mit der Aufnahmeeinrichtung 47 des Verriegelungsgegenelements 37 löst.

Zur Überführung des Verdecks 3 von seiner geschlossenen Position in seine offene Position läuft der in den Figuren 2 bis 7 gezeigte Bewegungsablauf in umgekehrter Reihenfolge ab, d. h. zunächst wird der plattenförmige Abschnitt 43 des Verriegelungselements 35 durch eine Betätigung des Griffelements 45 um die Schwenkachse 39 aus einem Eingriff mit der Aufnahmeeinrichtung 47 des Verriegelungsgegenelements 37 verschwenkt, dann wird das Verdeck 3 in seinem an der A-Säule 11 angeordneten Bereich in Fahrzeughochrichtung bewegt, so dass die Zentriereinrichtung außer Eingriff kommt, und anschließend wird das Griffelement 45 in seine an dem Seitenholm 19 angeordnete Position zurückverschwenkt.

## Patentansprüche

1. Verdeck für ein Cabriolet-Fahrzeug (1), welches zwischen einer einen Fahrgastraum (7) freigebenden Position und einer den Fahrgastraum (7) überspannenden Position verlagerbar ist, mit wenigstens einem Dachelement (19), welches zum Schließen des Verdecks (3) mit einem frontseitigen Ende durch wenigstens eine Verriegelungseinrichtung (25) an einer Windschutzscheibenhalterung (11, 13) festlegbar ist, wobei an dem Dachelement (19) ein Verriegelungselement (35) der Verriegelungseinrichtung (25) schwenkbar um eine an dem Dachelement (19) angeordnete Schwenkachse (39) ausgebildet ist, welches zum Festlegen des Verdecks (3) mit einem an der Windschutzscheibenhalterung (11, 13) angeordneten Verriegelungsgegenelement (37) der wenigstens einen Verriegelungseinrichtung (25) zusammenwirkt,
**dadurch gekennzeichnet,**
**dass** das Verriegelungselement (35) ein Griffelement (45) aufweist, welches sich sowohl bei geschlossener Position des Verdecks (3) mit sich in Verriegelungsposition befindlicher Verriegelungseinrichtung (25) als auch bei offenem Verdeck (3) im Bereich eines Dachrandes wenigstens annähernd in Fahrzeuglängsrichtung an dem Dachelement (19) erstreckt und zum In- und Aus-Eingriff-Bringen des Verriegelungselements (35) mit dem Verriegelungsgegenelement (37) wenigstens annähernd parallel zu einer Fahrzeugbodenebene in Richtung Fahrgastraum (7) verschwenkbar ist, wobei das Verriegelungselement (35) gegenüber dem Dachelement (19) um die Schwenkachse (39) schwenkbar ist.

2. Verdeck nach Anspruch 1,
**dadurch gekennzeichnet,**
**dass** das Verriegelungselement (35) zur formschlüssigen Festlegung in der Aufnahmeeinrichtung (47) an seinem zum Zusammenwirken mit dem Verriegelungsgegenelement (37) vorgesehenen Abschnitt (43) ein Rastelement (51) einer Rasteinrichtung (55) aufweist, welche in Verriegelungsposition des Verriegelungselements (35) mit einem Rastgegenelement (53) der Rasteinrichtung (55) zusammenwirkt.

3. Verdeck nach Anspruch 2,
**dadurch gekennzeichnet,**
**dass** das Rastelement (51) als ein sich in Verriegelungsposition des Verriegelungselements (35) wenigstens annähernd in Fahrzeuglängsrichtung erstreckendes Nockenelement ausgebildet ist, welches mit dem als Nut ausgebildeten Rastgegenelement (53) zusammenwirkt.

4. Verdeck nach Anspruch 3,
**dadurch gekennzeichnet,**
**dass** das Nockenelement (51) in Fahrzeughochrichtung gegenüber dem zum Zusammenwirken mit dem Verriegelungsgegenelement (37) vorgesehenen Abschnitt (43) des Verriegelungselements (35) bewegbar ist und von einer Federeinrichtung in Verriegelungsposition des Verriegelungselements (35) in die Nut (53) des Verriegelungsgegenelemehts (37) gedrückt ist.

5. Verdeck nach einem der Ansprüche 1 bis 4,
**dadurch gekennzeichnet,**
**dass** sich das Griffelement (45) von der Schwenkachse (39) in wenigstens annähernd entgegengesetzte Richtung wie der mit dem Verriegelungsgegenelement (37) zusammenwirkende Abschnitts (43) des Verriegelungselements (35) erstreckt.

6. Verdeck nach einem der Ansprüche 1 bis 5,
**dadurch gekennzeichnet,**
**dass** der zum Zusammenwirken mit dem Verriegelungsgegenelement (37) vorgesehene Abschnitt (43) des Verriegelungselements (35) wenigstens annähernd plattenförmig ausgebildet ist.

7. Verdeck nach einem der Ansprüche 1 bis 6,
**dadurch gekennzeichnet,**
**dass** das Griffelement (45) von einer Federeinrichtung in seine wenigstens annähernd parallel zu dem Dachelement (19) angeordnete Position gedrückt ist.

8. Verdeck nach einem der Ansprüche 1 bis 7,
**dadurch gekennzeichnet,**
**dass** eine Zentriereinrichtung (23) mit einem an dem Dachelement (19) angeordneten Zentrierelement (27) und einem an der Windschutzscheibenhalterung (11, 13) angeordneten Zentriergegenelement (31) vorgesehen ist, mittels welcher das Verdeck (3) in seiner den Fahrgastraum (7) überspannenden Position vor einer Festlegung durch die Verriegelungseinrichtung (25) an der Windschutzscheibenhalterung (11, 13) zentrierbar ist.

9. Verdeck nach Anspruch 8,
**dadurch gekennzeichnet,**
**dass** das Zentrierelement (27) mit einem Bolzen (28) ausgebildet ist, welcher zum Zusammenwirken mit dem in Form einer Bohrung (33) ausgebildeten Zentriergegenelement (31) ausgebildet ist.

10. Verdeck nach Anspruch 9,
**dadurch gekennzeichnet,**
**dass** die Bohrung (33) des Zentriergegenelement (31) in Fahrzeughochrichtung konisch geformt ausgebildet ist.

11. Verdeck nach einem der Ansprüche 1 bis 10,
**dadurch gekennzeichnet,**
**dass** zwei Verriegelungseinrichtungen (25) vorgesehen sind, wobei eine Verriegelungseinrichtung (25) in einem in Fahrzeugfrontrichtung linken Bereich und eine Verriegelungseinrichtung in einem in Fahrzeugfrontrichtung rechten Bereich des Verdecks angeordnet ist.

12. Verdeck nach einem der Ansprüche 1 bis 11,
**dadurch gekennzeichnet,**
**dass** das Dachelement (19) als Seitenholm des Verdecks (3) ausgebildet ist.

## Claims

1. A hood for a convertible vehicle (1), which is displaceable between a position uncovering a passenger compartment (7) and a position covering the passenger compartment (7), said hood comprising at least one roof element (19), a front end of which can be fixed to a windscreen support (11, 13) by at least one locking device (25) in order to close the hood (3), a locking element (35) of the locking device (25) being provided on the roof element (19) to pivot around a pivoting axis (39) arranged on the roof element (19), said locking element (35) cooperating with a complementary locking element (37) of said at least one locking device (25) in order to fix the hood (3), said complementary locking element (37) being arranged on the windscreen support (11, 13),
**characterised in that**
the locking element (35) comprises a handle element (45) which extends on the roof element (19) adjacent to a roof edge at least approximately in the longitudinal vehicle direction, both in the closed position of the hood (3), with the locking device (25) in the locking position, and when the hood (3) is open, and which handle element (45) can be pivoted at least approximately parallel to a vehicle floor plane towards the passenger compartment (7) in order to bring the locking element (35) into and out of engagement with the complementary locking element (37), said locking element (35) being pivotable with respect to the roof element (19) about the pivoting axis (39).

2. The hood according to claim 1, **characterised in that** for form-fit fixation in the receiving device (47), the locking element (35) comprises a latching element (51) of a latching device (55) at its portion (43) provided for cooperation with the complementary locking element (37), said latching element (51) cooperating with a complementary latching element (53) of the latching device (55) in the locking position of the locking element (35).

3. The hood according to claim 2, **characterised in that** the latching element (51) is provided as a cam element which extends at least approximately in the longitudinal vehicle direction in the locking position of the locking element (35) and cooperates with the complementary latching element (53) in the form of a groove.

4. The hood according to claim 3, **characterised in that** the cam element (51) can be moved in the vertical vehicle direction with respect to the portion (43) of the locking element (35) that is provided for cooperation with the complementary locking element (37) and said cam element (51) is urged into the groove (53) of the complementary locking element (37) by a spring device in the locking position of the locking element (35).

5. The hood according to any one of claims 1 to 4, **characterised in that** the handle element (45) extends from the pivoting axis (39) in an at least approximately opposite direction to the portion (43) of the locking element (35) which cooperates with the complementary locking element (37).

6. The hood according to any one of claims 1 to 5, **characterised in that** the portion (43) of the locking element (35) which is provided for cooperation with the complementary locking element (37) is at least approximately plate-shaped.

7. The hood according to any one of claims 1 to 6, **characterised in that** the handle element (45) is urged by a spring device into its position which is at least approximately parallel to the roof element (19).

8. The hood according to any one of claims 1 to 7, **characterised in that** a centring device (23) is provided with a centring element (27) arranged on the roof element (19) and with a complementary centring element (31), arranged on the windscreen support (11, 13), by means of which centring device (23) the hood (3), in its position covering the passenger compartment (7), can be centred on the windscreen support (11, 13) before being fixed by the locking device (25).

9. The hood according to claim 8, **characterised in that** the centring element (27) is provided with a bolt (28) which is provided for cooperation with the complementary centring element (31) that is provided in the form of a bore (33).

10. The hood according to claim 9, **characterised in that** the bore (33) of the complementary centring element (31) is cone-shaped in the vertical vehicle direction.

11. The hood according to any one of claims 1 to 10, **characterised in that** two locking devices (25) are provided, with one locking device (25) being arranged in a left-hand region, viewed in the direction of the vehicle front, and one locking device being arranged in a right-hand region, also viewed in the direction of the vehicle front.

12. The hood according to any one of claims 1 to 11, **characterised in that** the roof element (19) is provided as a lateral column of the hood (3).

## Revendications

1. Capote pour un véhicule cabriolet (1), ladite capote étant déplaçable entre une position découvrant un habitacle (7) et une position couvrant ledit habitacle (7), ladite capote comprenant au moins un élément de toit (19), dont une extrémité avant est fixable à un support de pare-brise (11, 13) par au moins un dispositif de verrouillage (25) afin de fermer la capote (3), un élément de verrouillage (35) du dispositif de verrouillage (25) étant réalisé sur l'élément de toit (19) de manière à pouvoir pivoter autour d'un axe de pivotement (39) disposé sur l'élément de toit (19), ledit élément de verrouillage (35) coopérant avec un élément de verrouillage complémentaire (37) dudit au moins un dispositif de verrouillage (25) afin de fixer la capote (3), ledit élément de verrouillage complémentaire (37) étant disposé sur le support de pare-brise (11, 13),
**caractérisé en ce que**
l'élément de verrouillage (35) comprend un élément de poignée (45) qui s'étend sur l'élément de toit (19) dans la région d'un bord du toit au moins approximativement dans la direction longitudinale du véhicule, aussi bien dans la position fermée de la capote (3), dans laquelle le dispositif de verrouillage (25) se trouve en position de verrouillage, que lors de l'ouverture de la capote (3), ledit élément de poignée (45) pouvant pivoter vers l'habitacle (7) au moins approximativement parallèlement par rapport à un plan de fond du véhicule afin de mettre l'élément de verrouillage (35) en prise et hors prise avec l'élément de verrouillage complémentaire (37), ledit élément de verrouillage (35) pouvant pivoter par rapport à l'élément de toit (19) autour de l'axe de pivotement (39).

2. Capote selon la revendication 1, **caractérisé en ce que**, pour la fixation par conjugaison de forme dans le dispositif de logement (47), l'élément de verrouillage (35) comprend, dans sa partie (43) destinée à coopérer avec l'élément de verrouillage complémentaire (37), un élément d'encliquetage (51) d'un dispositif d'encliquetage (55), ledit élément d'encliquetage (51) coopérant avec un élément d'encliquetage complémentaire (53) du dispositif d'encliquetage (55) dans la position de verrouillage de l'élément de verrouillage (35).

3. Capote selon la revendication 2, **caractérisé en ce que** l'élément d'encliquetage (51) est réalisé comme un élément de came qui, dans la position de verrouillage de l'élément de verrouillage (35), s'étend au moins approximativement dans la direction longitudinale du véhicule et coopère avec l'élément d'encliquetage complémentaire (53) qui est réalisé sous forme d'une rainure.

4. Capote selon la revendication 3, **caractérisé en ce que** l'élément de came (51) est déplaçable en direction verticale du véhicule par rapport à la partie (43) de l'élément de verrouillage (35) destinée à coopérer avec l'élément de verrouillage complémentaire (37) et, dans la position de verrouillage de l'élément de verrouillage (35), ledit élément de came (51) est poussé dans la rainure (53) de l'élément de verrouillage complémentaire (37) par un moyen formant ressort.

5. Capote selon l'une quelconque des revendications 1 à 4, **caractérisé en ce que** l'élément de poignée (45) s'étend à partir de l'axe de pivotement (39) dans une direction au moins approximativement opposée à la partie (43) de l'élément de verrouillage (35) qui coopère avec l'élément de verrouillage complémentaire (37).

6. Capote selon l'une quelconque des revendications 1 à 5, **caractérisé en ce que** la partie (43) de l'élément de verrouillage (35) destinée à coopérer avec l'élément de verrouillage complémentaire (37) est réalisée au moins approximativement sous forme d'une plaque.

7. Capote selon l'une quelconque des revendications 1 à 6, **caractérisé en ce que** l'élément de poignée (45) est poussé vers sa position au moins approximativement parallèle à l'élément de toit (19) par un moyen formant ressort.

8. Capote selon l'une quelconque des revendications 1 à 7, **caractérisé en ce que** l'on prévoit un dispositif de centrage (23), qui comprend un élément de centrage (27) disposé sur l'élément de toit (19) et un élément de centrage complémentaire (31) disposé sur le support de pare-brise (11, 13), au moyen duquel dispositif de centrage (23) la capote (3), dans sa position couvrant l'habitacle (7), peut être centrée sur le support de pare-brise (11, 13) avant d'être fixée par le dispositif de verrouillage (25).

9. Capote selon la revendication 8, **caractérisé en ce que** l'élément de centrage (27) est réalisé avec un boulon (28) destiné à coopérer avec l'élément de centrage complémentaire (31) qui est réalisé sous forme d'un alésage (33).

10. Capote selon la revendication 9, **caractérisé en ce que** l'alésage (33) de l'élément de centrage complémentaire (31) est réalisé sous forme conique dans la direction verticale du véhicule.

11. Capote selon l'une quelconque des revendications 1 à 10, **caractérisé en ce que** l'on prévoit deux dispositifs de verrouillage (25), dont un dispositif de verrouillage (25) est disposé dans une région gauche, en vue vers l'avant du véhicule, et l'autre dispositif de verrouillage est disposé dans une région droite, également en vue vers l'avant du véhicule.

12. Capote selon l'une quelconque des revendications 1 à 11, **caractérisé en ce que** l'élément de toit (19) est réalisé sous forme d'un montant latéral de la capote (3).
